# EUROPEAN PATENT APPLICATION

(11) **EP 4 191 998 A1**
(43) Date of publication of application: **07.06.2023**
(21) Application number: 20947753.8
(22) Date of filing: 17.12.2020
(51) Int. Cl.: H04N 5/235, H04N 5/225

(54) **INFRARED IMAGE CAPTURING DEVICE, AND INFRARED IMAGE CAPTURING SYSTEM**

(30) Priority: 29.07.2020 JP 2020128014
(71) Applicant: JVCKENWOOD Corporation, Yokohama-shi, Kanagawa 221-0022 (JP)
(72) Inventor: CHIBA, Hidetoshi, Yokohama-shi, Kanagawa 221-0022 (JP)
(74) Representative: Carstens, Dirk Wilhelm
(86) International application number: PCT/JP2020/047126
(87) International publication number: WO 2022/024411

(57) **Abstract**

A light emitting unit 11 emits infrared rays. An imaging element 122 converts incident infrared rays into an electric signal and outputs the electric signal. A control unit 13 estimates a light emission timing at which infrared rays are emitted from another infrared imaging device based on an infrared picture generated based on the electrical signal output from the imaging element 122, and performs control to cause the light emitting unit 11 to emit infrared rays in a period in which the infrared rays are not emitted from the another infrared imaging device.

## Description

### [TECHNICAL FIELD]

The present invention relates to an infrared imaging device and an infrared imaging system that irradiate a subject with infrared rays and image infrared rays reflected from the subject.

### [BACKGROUND ART]

In recent years, the number of vehicles in which a driver monitoring system is installed is increasing. The driver monitoring system is capable of detecting inattentiveness or dozing of the driver and call attention to the driver by imaging the face of the driver. In general, an infrared camera is used so that the driver's face can be imaged with high quality even in a dark situation at night or in a tunnel (see, for example, Patent Literature 1).

In addition, an increasing number of vehicles are equipped with an in-cabin monitoring system that monitors not only the driver's face but also the entire cabin including a passenger seat and a rear seat. In a case where each of the driver monitoring system and the in-cabin monitoring system includes an infrared light and an infrared camera, when the in-cabin monitoring system is retrofitted to a vehicle in which the driver monitoring system is already installed, two infrared lights coexist in the cabin.

### [PRIOR ART DOCUMENT]

### [Patent Literature]

[Patent Literature 1] JP 2003-209742 A

### [SUMMARY OF INVENTION]

### [TECHNICAL PROBLEM]

Under the above-described environment, when the two infrared lights simultaneously emit light, the light interferes with each other, and the brightness of the imaged picture is not stable. In the driver monitoring system and the in-cabin monitoring system, the recognition accuracy of the face of an occupant may be deteriorated.

The present embodiment has been made in view of such a situation, and an object thereof is to provide a technique for avoiding interference of infrared rays in an environment where a plurality of infrared lights are present.

### [SOLUTION TO PROBLEM]

In order to solve the above problem, an infrared imaging device according to one aspect of the present embodiment is an infrared imaging device including: a light emitting unit that emits infrared rays; an imaging element that converts incident infrared rays into an electric signal and outputs the electric signal; and a control unit that estimates a light emission timing at which infrared rays are emitted from another infrared imaging device based on an infrared picture generated based on the electric signal output from the imaging element, and performs control to cause the light emitting unit to emit infrared rays in a period in which no infrared rays are emitted from the another infrared imaging device.

Another aspect of the present embodiment is also an infrared imaging device. This device is an infrared imaging device including: a light emitting unit that emits infrared rays; an imaging element that converts incident infrared rays into an electric signal and outputs the electric signal; an illuminance sensor that measures illuminance of the incident infrared rays; and a control unit that estimates a light emission timing at which infrared rays are emitted from another infrared imaging device based on a light-receiving pattern of the illuminance sensor, and performs control to cause the light emitting unit to emit infrared rays in a period in which no infrared rays are emitted from the another infrared imaging device.

Still another aspect of the present embodiment is an infrared imaging system. This infrared imaging system is an infrared imaging system including a first infrared imaging device and a second infrared imaging device installed in a cabin, and the first infrared imaging device includes: a light emitting unit that emits infrared rays; an imaging element that converts incident infrared rays into an electric signal and outputs the electric signal; and a control unit that estimates a light emission timing at which infrared rays are emitted from another infrared imaging device based on an infrared picture generated based on the electric signal output from the imaging element, and performs control to cause the light emitting unit to emit infrared rays in a period in which no infrared rays are emitted from the second infrared imaging device.

### [ADVANTAGEOUS EFFECTS OF INVENTION]

According to the present embodiment, interference of infrared rays can be avoided in an environment where a plurality of infrared lights is present.

### [BRIEF DESCRIPTION OF DRAWINGS]

Fig. 1 is a diagram illustrating an installation example of a first infrared imaging device and a second infrared imaging device in a vehicle.
Fig. 2 is a diagram illustrating a configuration example of a first infrared imaging device according to a first embodiment.
Fig. 3 is a diagram illustrating a basic concept of control of a light emission timing of a light emitting unit and an exposure timing of an imaging unit of the first infrared imaging device.
Fig. 4 is a diagram illustrating a specific example of processing of estimating a light emission timing of a light emitting unit of a second infrared imaging device in the rolling shutter system.
Fig. 5 is a diagram illustrating a specific example of processing of estimating the light emission timing of the light emitting unit of the second infrared imaging device in the global shutter system.
Fig. 6 is a diagram illustrating a configuration example of a first infrared imaging device according to a second embodiment.

### [DESCRIPTION OF EMBODIMENTS]

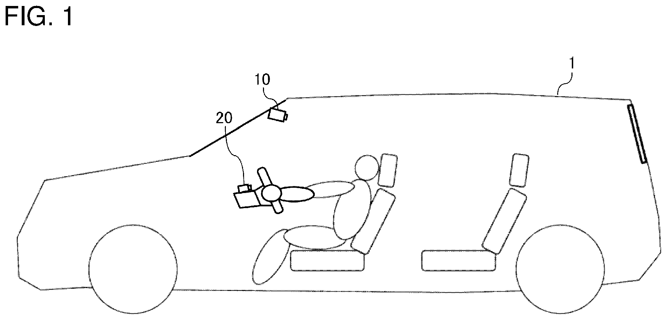

Fig. 1 is a diagram illustrating an installation example of a first infrared imaging device 10 and a second infrared imaging device 20 in a vehicle 1. The second infrared imaging device 20 is a device constituting a driver monitoring system, and the first infrared imaging device 10 is a device constituting an in-cabin monitoring system.

In Fig. 1, the second infrared imaging device 20 is installed above a steering column so as to face the face of the driver via a gap corresponding to the steering wheel. Note that the second infrared imaging device 20 may be incorporated in a steering wheel. The driver monitoring system using the second infrared imaging device 20 is a system specialized in monitoring a driver, and an orientation and a parameter of an imaging unit are set such that the face of the driver appears at the center of an angle of view.

In Fig. 1, the first infrared imaging device 10 is attached to a rearview mirror. The first infrared imaging device 10 may be installed on a center visor or a center console. The in-cabin monitoring system using the first infrared imaging device 10 is a system that monitors the entire cabin including the passenger seat and the rear seat, and can detect the number of occupants sitting on the passenger seat and the rear seat, whether or not all occupants including the driver wear seat belts, and the like, in addition to dozing and inattentive driving of the driver.

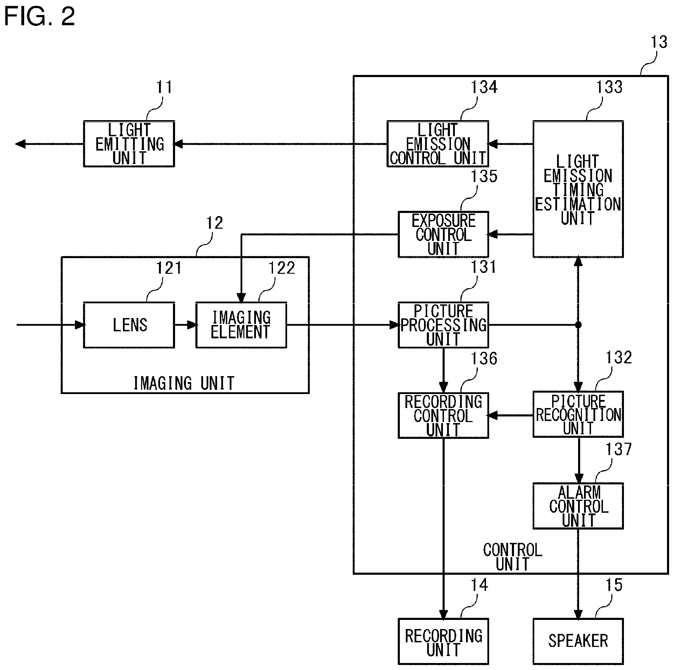

Fig. 2 is a diagram illustrating a configuration example of a first infrared imaging device 10 according to the first embodiment. The first infrared imaging device 10 illustrated in Fig. 2 includes a light emitting unit 11, an imaging unit 12, a control unit 13, a recording unit 14, and a speaker 15. The light emitting unit 11 includes an infrared light for irradiating the cabin with infrared rays. As the infrared light, for example, an infrared LED can be used.

The imaging unit 12 receives infrared rays and generates infrared pictures. Hereinafter, in the present embodiment, infrared rays emitted by the light emitting unit 11 and imaged by the imaging unit 12 are assumed to be near infrared rays. Unlike far infrared pictures, when near infrared pictures are captured, it is necessary to irradiate a subject with near infrared rays and to image reflected light from the subject.

The imaging unit 12 includes a lens 121 and an imaging element 122. The lens 121 condenses light in a predetermined region in the cabin and causes the light to enter the imaging element 122. The imaging element 122 converts incident light into an electric signal. As the imaging element 122, a solid-state imaging element such as a complementary metal oxide semiconductor (CMOS) image sensor or a charge coupled device (CCD) image sensor is used.

The imaging element 122 has a sensitivity in the near-infrared region. A visible light cut filter that cuts visible light and transmits infrared rays is installed on the imaging element 122. Note that, in a case where an imaging element having a sensitivity only in the near-infrared region is used, the visible light cut filter can be omitted.

The present embodiment adopts an electronic shutter. The imaging element 122 normally takes an image at a frame rate of 30 Hz or 60 Hz. A signal processing circuit (not illustrated) is provided at a subsequent stage of the imaging element 122. The signal processing circuit performs signal processing such as A/D conversion and noise removal on the electric signal input from the imaging element 122. The picture signal output in units of frames from the signal processing circuit is supplied to the control unit 13.

The control unit 13 includes a picture processing unit 131, a picture recognition unit 132, a light emission timing estimation unit 133, a light emission control unit 134, an exposure control unit 135, a recording control unit 136, and an alarm control unit 137. These components can be implemented by cooperation of hardware resources and software resources or only hardware resources. As the hardware resources, a CPU, a ROM, a RAM, a graphics processing unit (GPU), a digital signal processor (DSP), an image signal processor (ISP), an application specific integrated circuit (ASIC), a field-programmable gate array (FPGA), and other LSIs can be used. A program such as firmware can be used as the software resource.

The picture processing unit 131 performs various types of picture processing such as gradation correction and contour correction on the picture signal input from the imaging unit 12 and then outputs the resultant picture signal.

The picture recognition unit 132 includes, as dictionary data, an identifier of various objects such as an identifier of a person generated by learning a large number of pictures in which a person appears and an identifier of a seat belt generated by learning a large number of pictures in which a seat belt appears. Note that an identifier for identifying a specific person may be included.

The picture recognition unit 132 searches for various objects using identifiers of the various objects in the infrared picture input from the picture processing unit 131. For example, a Haar-like feature quantity, a histogram of gradients (HOG) feature quantity, a local binary pattern (LBP) feature quantity, or the like can be used to detect the object.

The exposure control unit 135 controls the exposure timing of the imaging element 122 in accordance with an instruction from the light emission timing estimation unit 133. In a case where the rolling shutter system is adopted for the imaging element 122, the exposure control unit 135 controls the exposure timing and the reading timing for each line. In a case where the global shutter system is adopted for the imaging element 122, the exposure control unit 135 controls the exposure timing and the reading timing for all pixels simultaneously. In a case where a CCD image sensor is used for the imaging element 122, the global shutter system is employed. In a case where the CMOS image sensor is used for the imaging element 122, the rolling shutter system is often adopted. In recent years, the use of global shutter system CMOS image sensors has also increased.

The light emission control unit 134 controls the light emission timing (the irradiation timing of the infrared LED in the present embodiment) of the light emitting unit 11 in synchronization with the exposure timing of the imaging element 122 by the exposure control unit 135. The light emitting unit 11 only needs to emit light only in a period in which the imaging element 122 is exposed. If the light emitting unit 11 emits light in a period in which the imaging element 122 is not exposed, its power consumption is wasted. Furthermore, in a case where a plurality of infrared imaging devices are installed at neighboring places as in the present embodiment, it is necessary to operate the irradiation of infrared rays in a suppressive manner in order to suppress interference between infrared rays.

The light emission timing estimation unit 133 designates a light emission timing and an exposure timing for the light emission control unit 134 and the exposure control unit 135, respectively. The detailed operation of the light emission timing estimation unit 133 will be described later.

The recording unit 14 includes a built-in or detachable external nonvolatile recording medium. As a built-in type, a NAND flash memory, an SSD, an HDD, or the like can be used. As an external type, a flash memory card (for example, an SD card), an optical disk, a magnetic tape, or the like can be used.

The recording control unit 136 can record the pictures imaged by the imaging unit 12 on a recording medium in the recording unit 14. The recording control unit 136 can record a moving picture during driving like a drive recorder, or can record a still image when a predetermined event is detected based on picture recognition. Examples of the detection of the event include detection of dozing or inattentiveness of the driver.

The speaker 15 outputs a warning sound, a warning message, or voice guidance to the driver or an occupant other than the driver. When a predetermined event is detected based on picture recognition, the alarm control unit 137 causes the speaker 15 to output a warning sound or a voice message corresponding to the content of the detected event. For example, when dozing or inattentiveness of the driver is detected, the alarm control unit 137 causes the speaker 15 to output a warning sound. In addition, in a case where a child sitting on the rear seat falls from the seat, the alarm control unit 137 causes the speaker 15 to output a message such as "The child has fallen from the back seat".

The first infrared imaging device 10 constituting the in-cabin monitoring system and the second infrared imaging device 20 constituting the driver monitoring system have the same basic configuration. The imaging range by the imaging unit, the irradiation range of the infrared rays by the light emitting unit, the type of the object capable of picture recognition, and the type of the application executed on the basis of the picture recognition are different between the two.

When the first infrared imaging device 10 and the second infrared imaging device 20 are constructed as an integrated system, the control units of both can be integrated into one. On the other hand, when the installation timings of the first infrared imaging device 10 and the second infrared imaging device 20 are different (the first infrared imaging device 10 is typically installed later), or when the manufacturers of the first infrared imaging device 10 and the second infrared imaging device 20 are different, the first infrared imaging device 10 and the second infrared imaging device 20 operate independently without cooperation.

In this case, the infrared rays emitted from the light emitting unit of the first infrared imaging device 10 and the infrared rays emitted from the light emitting unit of the second infrared imaging device 20 may interfere with each other. In an infrared picture imaged in a period in which the infrared rays from the both are simultaneously emitted, a whiteout is highly likely to occur. In an infrared picture in which a whiteout has occurred, the accuracy of picture recognition may decrease, and the driving support function may fail to work effectively. In the first infrared imaging device 10 according to the first embodiment, a mechanism for the infrared ray interference prevention measures is introduced.

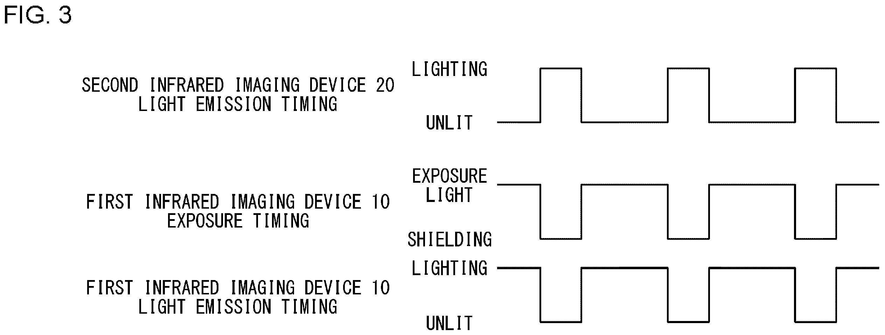

Fig. 3 is a diagram illustrating a basic concept of control of the light emission timing of the light emitting unit 11 and the exposure timing of the imaging unit 12 of the first infrared imaging device 10. The light emission timing estimation unit 133 estimates a light emission timing at which infrared rays are emitted from the light emitting unit of the second infrared imaging device 20 on the basis of the infrared picture input from the picture processing unit 131.

For example, the light emission timing estimation unit 133 calculates an average value of luminance of all pixels for each input infrared picture. When the average value is larger than or equal to a threshold value, the light emission timing estimation unit 133 determines that the infrared picture is imaged during a period in which the light emitting unit of the second infrared imaging device 20 is lit. On the other hand, when the average value is less than the threshold value, the light emission timing estimation unit 133 determines that the infrared picture is imaged during a period in which the light emitting unit of the second infrared imaging device 20 is unlit.

The light emission control unit 134 and the exposure control unit 135 control the light emission timing of the light emitting unit 11 and the exposure timing of the imaging element 122 so as to cause the light emitting unit 11 to emit infrared rays and cause the imaging element 122 to perform exposure in a period in which infrared rays are not emitted from the light emitting unit of the second infrared imaging device 20 estimated by the light emission timing estimation unit 133.

Note that Fig. 3 illustrates an example in which the unlit period of the light emitting unit of the second infrared imaging device 20 and the lighting period of the light emitting unit 11 of the first infrared imaging device 10 coincide with each other, but the lighting period of the light emitting unit 11 of the first infrared imaging device 10 only needs to fall within the unlit period of the light emitting unit of the second infrared imaging device 20. That is, the light emission pattern of the light emitting unit of the second infrared imaging device 20 and the light emission pattern of the light emitting unit 11 of the first infrared imaging device 10 do not need to be in completely opposite phases with each other.

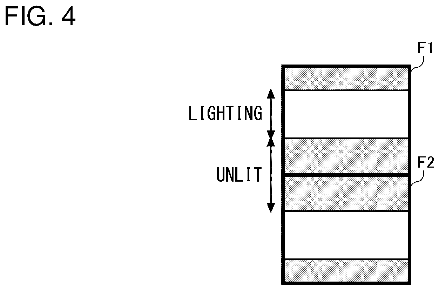

Fig. 4 is a diagram illustrating a specific example of processing of estimating the light emission timing of the light emitting unit of the second infrared imaging device 20 in the rolling shutter system. In the CMOS image sensor using the rolling shutter system, exposure is sequentially performed in units of lines from the uppermost horizontal line to the lowermost horizontal line of an imaging region including a plurality of pixels arranged in a matrix, and pixel information is sequentially read in order of the exposed lines.

In the rolling shutter system, since the exposure timing is different for each horizontal line in one frame picture, the picture is temporally delayed from the picture of the head line as going downward in one frame picture. Therefore, in a case where a subject moving at a high speed is imaged, the subject is distorted.

The rolling shutter system is affected by flicker in one frame picture. In the rolling shutter system, light and darkness may change due to the influence of flicker with a certain line in the frame picture as a boundary. On the other hand, in the global shutter system, a bright frame picture and a dark frame picture may be generated depending on the blinking of the light source, but a contrast due to the blinking of the light source does not occur in one frame picture.

When the light emission timing of the light emitting unit of the second infrared imaging device 20 is estimated, the light emission control unit 134 turns off the light emitting unit 11. In a case where the rolling shutter system imaging element 122 is used, the exposure control unit 135 sets the exposure time in the frame period as long as possible and sets the reading time as short as possible. The exposure time is preferably set equal to the frame period. That is, it is preferable to set the shutter speed to be as slow as the frame period.

The light emission timing estimation unit 133 specifies a boundary position (that is, a boundary line) at which the bright region and the dark region are switched in the frame picture imaged by the imaging unit 12. In the example illustrated in Fig. 4, the light emission timing estimation unit 133 measures a period from the exposure start timing of the line switched from the dark region to the bright region to the next exposure start timing of the line switched from the bright region to the dark region in the first frame picture F1. The light emission timing estimation unit 133 estimates the measured period as a lighting period of the light emitting unit of the second infrared imaging device 20.

The light emission timing estimation unit 133 measures a period from the exposure start timing of the line switched from the bright region to the dark region in the first frame picture F1 to the exposure start timing of the line switched from the dark region to the bright region in the second frame picture F2. The light emission timing estimation unit 133 estimates the measured period as an unlit period of the light emitting unit of the second infrared imaging device 20.

Through the above processing, the light emission timing estimation unit 133 can estimate the light emission timing of the light emitting unit of the second infrared imaging device 20. The light emission timing estimation processing is executed when the first infrared imaging device 10 is activated. After the start of traveling of the vehicle 1, for example, the process may be performed during a period in which the vehicle 1 is temporarily stopped, or may be periodically performed.

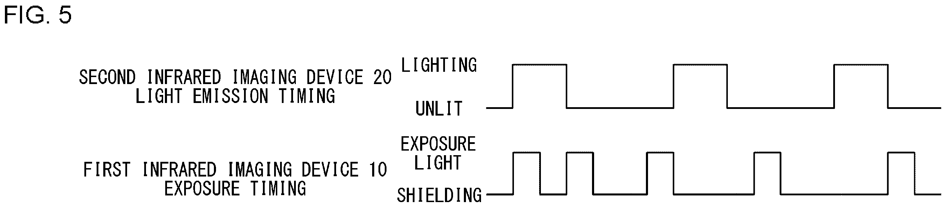

Fig. 5 is a diagram illustrating a specific example of processing of estimating the light emission timing of the light emitting unit of the second infrared imaging device 20 in the global shutter system. When the light emission timing of the light emitting unit of the second infrared imaging device 20 is estimated, the light emission control unit 134 turns off the light emitting unit 11. In a case where the global shutter system imaging element 122 is used, the exposure control unit 135 controls the light emission timing of the light emitting unit 11 using the exposure pattern for scanning.

The exposure pattern for scanning is an exposure pattern with a variable frame rate. As illustrated in Fig. 5, the exposure pattern for scanning is an exposure pattern in which the exposure time of each frame is constant and the exposure interval between frames changes. The light emission timing estimation unit 133 specifies whether each frame picture is a bright picture or a dark picture. Whether the picture is a bright picture or a dark picture can be specified by, for example, comparing an average value of luminance of all pixels in the picture with a threshold value as described above. The light emission timing estimation unit 133 can estimate the light emission timing of the light emitting unit of the second infrared imaging device 20 on the basis of the exposure pattern for scanning created in advance and the transition of light and darkness of each frame picture.

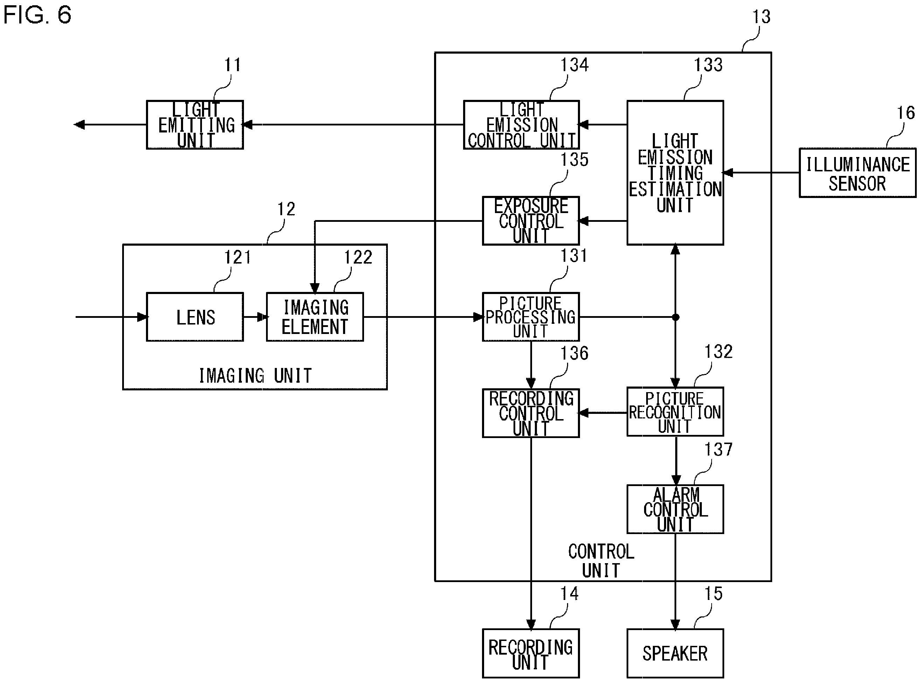

Fig. 6 is a diagram illustrating a configuration example of a first infrared imaging device 10 according to a second embodiment. The configuration of the first infrared imaging device 10 according to the second embodiment illustrated in Fig. 6 is a configuration in which an illuminance sensor 16 is added to the configuration of the first infrared imaging device 10 according to the first embodiment illustrated in Fig. 2. The illuminance sensor 16 includes a light-receiving element (for example, a photodiode) for detection of infrared rays, measures the illuminance of the infrared rays, and outputs the measured illuminance to the light emission timing estimation unit 133.

When the light emission timing of the light emitting unit of the second infrared imaging device 20 is estimated, the light emission control unit 134 turns off the light emitting unit 11. In the second embodiment, the light emission timing estimation unit 133 estimates the light emission timing of the light emitting unit of the second infrared imaging device 20 on the basis of the light-receiving pattern of infrared rays measured by the illuminance sensor 16. Since the illuminance sensor 16 continuously receives infrared rays, it can output substantially the same light-receiving pattern as with the light emission timing of the light emitting unit of the second infrared imaging device 20.

In the second embodiment, it is possible to detect in real time that the light emission timing of the light emitting unit of the second infrared imaging device 20 has changed during the operation of the first infrared imaging device 10. The light emission timing estimation unit 133 extracts, from the output of the illuminance sensor 16, a light reception pattern in a period in which the infrared rays are not emitted from the light emitting unit 11 of the first infrared imaging device 10, and monitors the light-receiving pattern. When detecting that the light-receiving pattern in the period has changed, the light emission timing estimation unit 133 causes the light emission control unit 134 to turn off the light emitting unit 11. The light emission timing estimation unit 133 estimates the light emission timing of the light emitting unit of the second infrared imaging device 20 on the basis of the light-receiving pattern of infrared rays measured by the illuminance sensor 16 under this environment.

In the second embodiment, the function of estimating the light emission timing of the light emitting unit of the second infrared imaging device 20 based on the infrared picture imaged by the imaging element 122 described in the first embodiment is basically unnecessary.

Note that estimation processing of the light emission timing of the light emitting unit of the second infrared imaging device 20 based on the light-receiving pattern of infrared rays measured by the illuminance sensor 16 may be used together with estimation processing of the light emission timing of the light emitting unit of the second infrared imaging device 20 based on the infrared picture imaged by the imaging element 122. When both measurement results do not substantially match with each other, an abnormality may have occurred in the imaging element 122 or the illuminance sensor 16. When the both are used in combination, they can be used as a failure detection mode of the imaging element 122 or the illuminance sensor 16.

As described above, according to the first and second embodiments, the first infrared imaging device 10 and the second infrared imaging device 20 can be prevented from simultaneously emitting infrared rays to avoid interference between infrared rays. As a result, the brightness of the infrared pictures imaged by the first infrared imaging device 10 and the second infrared imaging device 20 can be stabilized to prevent the accuracy of picture recognition from deteriorating.

In addition, it is not necessary to connect the first infrared imaging device 10 and the second infrared imaging device 20 by wiring, which eliminates the necessity of an additional cost for installing the wiring. In addition, the degree of freedom of the installation positions of the first infrared imaging device 10 and the second infrared imaging device 20 does not decrease due to the connection by the wiring. In addition, deterioration in designability in the cabin due to the connection by wiring does not occur.

Furthermore, according to the first embodiment, even when the illuminance sensor 16 is not provided, interference between infrared rays can be avoided. Furthermore, according to the second embodiment, providing the illuminance sensor 16 allows the light emission timing of the light emitting unit of the second infrared imaging device 20 to be constantly monitored.

The present invention has been described based on the embodiments. The embodiments are intended to be illustrative only and it will be understood by those skilled in the art that various modifications to constituting elements and processes can be made and that such modifications are also within the scope of the present invention.

In the first and second embodiments described above, an example has been described in which the first infrared imaging device 10 estimates the light emission timing of the light emitting unit of the second infrared imaging device 20, and performs the control to emit infrared rays from the light emitting unit 11 of the first infrared imaging device 10 in a period in which infrared rays are not emitted from the second infrared imaging device 20. In this regard, the second infrared imaging device 20 estimates the light emission timing of the light emitting unit 11 of the first infrared imaging device 10, and may perform control to emit infrared rays from the light emitting unit of the second infrared imaging device 20 in a period in which infrared rays are not emitted from the first infrared imaging device 10.

In the first and second embodiments described above, an example in which the first infrared imaging device 10 and the second infrared imaging device 20 are installed in the cabin has been described. In this regard, the infrared imaging devices may be installed on a road or in a building as monitoring cameras. In particular, it is effective for a monitoring camera having a picture recognition function for detecting a suspicious person or an intruder.

### [INDUSTRIAL APPLICABILITY]

The present invention can be used in an environment where there are a plurality of infrared lights.

### [REFERENCE SIGNS LIST]

1 vehicle, 10 first infrared imaging device, 20 second infrared imaging device, 11 light emitting unit, 12 Imaging unit 121 lens, 122 imaging element, 13 control unit, 131 picture processing unit, 132 picture recognition unit, 133 light emission timing estimation unit, 134 light emission control unit, 135 exposure control unit, 136 recording control unit, 137 alarm control unit, 14 recording unit, 15 speaker, 16 illuminance sensor.

## Claims

1. An infrared imaging device comprising:
a light emitting unit that emits infrared rays;
an imaging element that converts incident infrared rays into an electric signal and outputs the electric signal; and
a control unit that estimates a light emission timing at which infrared rays are emitted from another infrared imaging device based on an infrared picture generated based on the electrical signal output from the imaging element, and performs control to cause the light emitting unit to emit infrared rays in a period in which the infrared rays are not emitted from the another infrared imaging device.

2. The infrared imaging device according to claim 1, wherein, in a case where the imaging element is of a global shutter system,
the control unit estimates a light emission timing at which infrared rays are emitted from the another infrared imaging device based on whether each infrared picture imaged by the imaging element is a bright picture or a dark picture while stopping emission of infrared rays from the light emitting unit and varying the frame rate.

3. The infrared imaging device according to claim 1, wherein, in a case where the imaging element is of a rolling shutter system,
the control unit estimates a light emission timing at which infrared rays are emitted from the another infrared imaging device based on a boundary position between a bright region and a dark region of each infrared picture imaged by the imaging element while stopping emission of infrared rays from the light emitting unit.

4. An infrared imaging device comprising:
a light emitting unit that emits infrared rays;
an imaging element that converts incident infrared rays into an electric signal and outputs the electric signal;
an illuminance sensor that measures illuminance of the incident infrared rays; and
a control unit that estimates a light emission timing at which infrared rays are emitted from another infrared imaging device based on a light-receiving pattern of the illuminance sensor, and performs control to cause the light emitting unit to emit infrared rays in a period in which no infrared rays are emitted from the another infrared imaging device.

5. An infrared imaging system comprising: a first infrared imaging device and a second infrared imaging device installed in a cabin, wherein
the first infrared imaging device comprises:
a light emitting unit that emits infrared rays;
an imaging element that converts incident infrared rays into an electric signal and outputs the electric signal; and
a control unit that estimates a light emission timing at which infrared rays are emitted from another infrared imaging device based on an infrared picture generated based on the electric signal output from the imaging element, and performs control to cause the light emitting unit to emit infrared rays in a period in which no infrared rays are emitted from the second infrared imaging device.
